# DEMANDE DE BREVET EUROPEEN

(11) **EP 1 765 012 A1**
(43) Date de publication de la demande: **21.03.2007**
(21) Numéro de dépôt: 05108446.5
(22) Date de dépôt: 14.09.2005
(51) Int. Cl.: H04N 7/16

(54) **Méthode de vérification d'un dispositif cible relié à un dispositif maître**

(71) Demandeur: Nagravision S.A., 1033 Cheseaux-sur-Lausanne (CH)
(72) Inventeur: Le Buhan, Corinne, 1619 Les Paccots (CH); Zhao, Yishan, 92160 Antony (FR)
(74) Mandataire: Wenger, Joel-Théophile

(57) **Abrégé**

Le but de la présente invention est de proposer différentes méthodes de distribution et de gestion des listes de révocation associées aux normes de protection anti-copie, afin de faciliter leur traitement dans un environnement de télédiffusion tout en garantissant la sécurité contre le piratage de l'équipement de réception et des équipements connectés à ce récepteur de télédiffusion au sein d'un réseau domestique.

Ce but est atteint par une méthode de vérification d'un dispositif cible relié à un dispositif maître, celui-ci disposant de moyens pour recevoir un contenu transmis par un centre de diffusion via un flux de données, le dispositif maître et le dispositif cible s'authentifiant par l'échange d'un certificat comprenant au moins un identifiant de certificat, cette méthode comprenant les étapes suivantes :
a. transmission par télédiffusion d'au moins une table de vérification de dispositifs cible contenant une liste d'identifiant de certificat,
b. stockage de cette liste dans le dispositif maître,
c. extraction d'une indication de vérification associée au contenu, cette indication comprenant l'activation ou la désactivation de la vérification du dispositif cible,
d. si l'indication de vérification comprend l'activation de la vérification, vérification du certificat du dispositif cible par le dispositif maître, utilisation d'au moins une liste stockée pour autoriser ou interdire l'échange de donnée avec ledit dispositif cible.

## Description

### Introduction

La présente invention concerne le domaine de la protection de données numériques, en particulier des données de type audio/vidéo télédiffusées.

### Etat de la technique

L'échange de données telles que des flux vidéo entre dispositifs de traitement numérique nécessite la mise en place de technologies permettant de prévenir le piratage de ces données lors de l'accès et lors de leur transfert sur des réseaux ouverts, tels que les réseaux domestiques. Ainsi, avec l'arrivée des téléviseurs numériques, on peut trouver désormais des lecteurs de DVD qui disposent d'une sortie numérique vers de tels téléviseurs. On imagine bien que la meilleure protection anti-copie sur le DVD lui-même n'a aucun sens s'il suffit de reprendre les informations sortant du lecteur.

C'est pourquoi des solutions telles que DTCP, HDCP, SmartRight, ou SVP, ont été spécifiées pour la sécurisation des données transmises au sein d'un réseau domestique en ajoutant une encryption des données sortant par un tel équipement. Cette encryption est faite au moyen d'algorithmes de chiffrage dit symétriques, nécessitant des mécanismes confidentiels pour l'établissement des clés correspondantes qui doivent être connues de l'appareil émetteur ainsi que de l'appareil récepteur des données, tout en étant régulièrement renouvelées pour maintenir leur confidentialité. Selon une approche retenue, chaque dispositif comprend dans ses moyens de communication, un certificat contenant une clé privée et une clé publique permettant l'établissement d'un canal authentifié sécurisé (SAC - secure authenticated channel). Ces certificats contiennent un numéro d'identification et répondent généralement à la norme X.509.

Parallèlement, le certificat est utilisé pour une authentification mutuelle ou du receveur selon des mécanismes de vérification connus.

L'expérience passée a montré comment un système bien conçu à l'origine peut rapidement devenir obsolète s'il n'est pas capable de s'adapter aux attaques extérieures. Toute la sécurité des solutions à base d'échange de certificats, aussi connues sous l'appellation générale de PKI (Public Key Infrastructure - Infrastructure à Clé Publique), repose soit sur le renouvellement régulier des certificats, ce qui est difficile à mettre en place dans le cas d'appareils grand public, soit sur la révocation des certificats dont la sécurité a été compromise, par exemple dans le cas d'un appareil dont les secrets (en particulier la clé privée) ont été extraits par piratage et reproduits à grande échelle (clonage de l'appareil, par exemple sous la forme d'un logiciel de contre-façon).

C'est pourquoi, la tendance est d'ajouter aux DVD une liste de révocation de dispositifs dont les certificats ne satisfont pas aux normes de sécurité. Préalablement à la diffusion dudit DVD, une vérification est exécutée afin de vérifier si le lecteur est autorisé à accéder aux contenus et si le dispositif relié au lecteur est interdit de réception. Cette vérification est réalisée grâce à une liste des certificats révoqués (liste négative, dite liste noire). Dans le monde de la télédiffusion, un principe similaire peut être appliqué à savoir la diffusion d'une liste de révocation et un processus de vérification du récepteur et des dispositifs connectés à ce récepteur lorsque ces derniers demandent la réception des données reçues par le récepteur. Toutefois, cette approche soulève différents problèmes techniques et commerciaux du fait des différences, en termes de contraintes techniques, entre les applications de télédiffusion et la distribution de contenu sur des supports préempaquetés tels que les DVD.

### Brève description de l'invention

Le but de la présente invention est de proposer différentes méthodes de distribution et de gestion des listes de révocation associées aux normes de protection anti-copie, afin de faciliter leur traitement dans un environnement de télédiffusion tout en garantissant la sécurité contre le piratage de l'équipement de réception et des équipements connectés à ce récepteur de télédiffusion au sein d'un réseau domestique.

Ce but est atteint par une méthode de vérification d'un dispositif cible relié à un dispositif maître, celui-ci disposant de moyens pour recevoir un contenu transmis par un centre de diffusion via un flux de données, le dispositif maître et le dispositif cible s'authentifiant par l'échange d'un certificat comprenant au moins un identifiant de certificat, cette méthode comprenant les étapes suivantes :
a. transmission par télédiffusion d'au moins une table de vérification de dispositifs cible contenant une liste d'identifiant de certificat,
b. stockage de cette liste dans le dispositif maître,
c. extraction d'une indication de vérification associée au contenu, cette indication comprenant l'activation ou la désactivation de la vérification du dispositif cible,
d. si l'indication de vérification comprend l'activation de la vérification, vérification du certificat du dispositif cible par le dispositif maître, utilisation d'au moins une liste stockée pour autoriser ou interdire l'échange de donnée avec ledit dispositif cible.

Ainsi, le centre de diffusion peut décider d'activer ou désactiver la vérification du dispositif cible en fonction du contenu diffusé. Contrairement à la transmission des listes dans le cas d'un DVD, la liste de vérification n'est pas directement associée au contenu, car cela nécessiterait, d'une part, de la transmettre à intervalles réguliers sur toutes les chaînes diffusant un contenu nécessitant une protection contre le piratage, ce qui représenterait une consommation de bande passante inacceptable commercialement sur les réseaux de télédiffusion tels que les réseaux terrestres ou satellitaires, et d'autre part, de la reconstituer par le récepteur chaque fois qu'il y a un changement de programme sur une chaîne ou un changement de chaînes en cas de zapping, ce qui pourrait durer un temps important avant d'accéder aux premières images, donc pénaliser fortement les téléspectateurs.

De plus, selon un mode de réalisation de l'invention, la liste de vérification peut être de deux types : liste positive ou liste négative.

Selon un premier mode de réalisation, la liste négative contient les identifiants de certificats invalidés correspondant aux équipements qui ne sont plus autorisés à recevoir le contenu. Cette liste est gérée par le fournisseur du système de protection utilisé et communiquée aux fournisseurs de contenus (les studios détenant les droits d'auteur par exemple) bénéficiaires dudit système de protection sous une forme spécifique, souvent appelé SRM (System Renewability Message).

La liste négative est habituellement utilisée dans les applications telles que la distribution de DVD pour lesquelles il n'est pas possible de communiquer individuellement des données à un lecteur grand public. De même, pour les applications de télédiffusion gratuite, cette liste négative doit être transmise à tous les récepteurs car il n'y a pas de mécanisme en place pour discriminer parmi ces derniers. Cependant, la liste négative présuppose une bonne connaissance du piratage, et est appelée à croître au cours du temps à mesure que le piratage se développe, jusqu'à éventuellement atteindre des proportions telles que la taille de la liste la rendra ingérable en télédiffusion. Ce problème est d'autant plus critique dans les applications de télédiffusion à péage dans lesquelles la réception du contenu est sujette à paiement préalable, soit sous forme d'abonnement, soit à la demande.

C'est pourquoi, pour ces applications plus spécifiquement, un second mode de réalisation de l'invention propose de transmettre et gérer individuellement une liste positive d'appareils autorisés à fonctionner avec le récepteur plutôt qu'une liste négative globale au parc de récepteurs. Ce mode de réalisation exploite un canal de communication sécurisé établi avec chaque récepteur individuellement en parallèle avec la télédiffusion globale des données à tous les récepteurs.

Selon ce second mode de réalisation, la liste positive contient les identifiants de certificats valides pour un réseau domestique donné, c'est-à-dire authentifiant les appareils qui sont autorisés à recevoir le contenu depuis une connexion avec le dispositif maître au sein d'un réseau domestique. Ainsi la liste positive est de taille restreinte, un réseau domestique rassemblant rarement plus d'une dizaine d'équipements.

Le mode de réalisation à base de liste positive individuelle sera mieux compris en considérant plus spécifiquement le cas de la norme HDCP, utilisée pour les téléviseurs haute définition disposant d'une entrée numérique sur interface DVI ou HDMI. Selon les experts en cryptographie S. Crosby et al. dans leur article «A cryptanalysis of the High-bandwidth Digital Content Protection system » présenté au congrès ACM-CC58 DRM Workshop en 2001, le piratage de 40 appareils HDCP permet d'obtenir suffisamment d'informations sur le système de certification pour générer aléatoirement des certificats pirates totalement valides du point de vue du système. L'utilisation de listes négatives sera dans ce cas-là totalement inutile. Par contre, l'utilisation de listes positives en collaboration avec les fabricants autorisés d'équipements HDCP permettra de limiter la distribution de contenu protégé à ces appareils exclusivement, grâce à la connaissance des certificats effectivement utilisés par les fabricants, par opposition aux certificats générés aléatoirement par le piratage.

L'identifiant d'un dispositif cible peut être soit son numéro de série, son numéro lot de fabrication, soit sa version logicielle ou matérielle, soit un identifiant de certificat. Pour la suite de l'exposé, nous prendrons ce dernier exemple sans exclure les autres variantes.

L'indication de vérification peut comprendre également d'autres informations telles que la liste à utiliser pour la vérification lors de la présence de plusieurs listes.

Par dispositif cible, on entend tout type de dispositif de visualisation, fixe ou transportable, un ordinateur, un enregistreur avec ou dans disque dur, un graveur ou un serveur de réseau. Ce dernier peut servir de passerelle entre différents dispositifs cibles.

### Brève description des figures

L'invention sera mieux comprise grâce à la description détaillée qui va suivre et qui se réfère aux dessins annexés qui sont donnés à titre d'exemple nullement limitatif, à savoir:

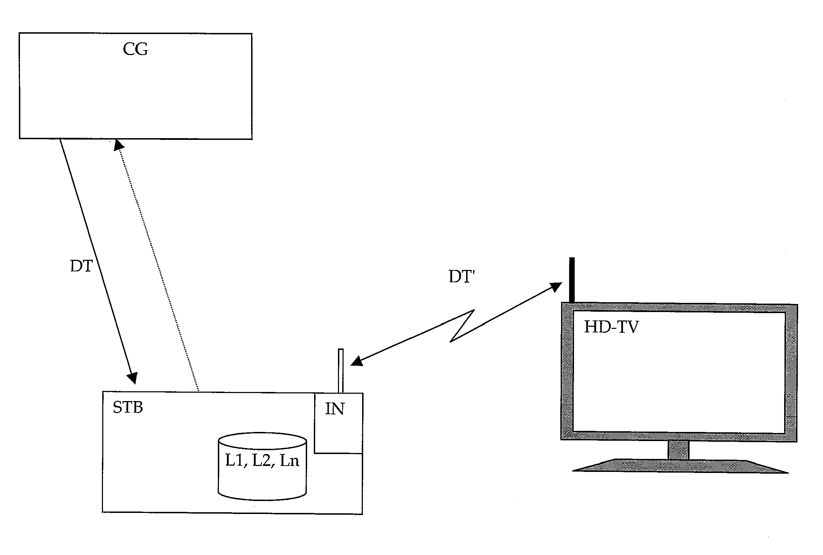

- la figure 1 illustre le passage des données du centre de gestion à un téléviseur haute définition

### Description détaillée

Dans un système de télédiffusion, des données représentant un contenu audio/vidéo ainsi que des métadonnées et des données de signalisation sont transmises par un centre de gestion CG à destination d'une pluralité d'unités de réception de télédiffusion multimédia STB.

Les flux audio et vidéo sont transmis au sein d'un canal MPEG, appelé programme, selon la signalisation dans une table PMT (Program Map Table) également transmise par télédiffusion. Si le programme est encrypté, un flux confidentiel de messages de contrôle (ECM) contenant les clés de décryption est associé au programme télédiffusé. Les différents canaux, correspondants aux différents contenus, et leurs métadonnées (telles que titre, année de création, genre, noms des acteurs principaux, etc...) sont eux-mêmes identifiés par un ensemble de tables de signalisation spécifiées en partie par la norme MPEG, en partie par les normes régionales DVB et ATSC, telles que les tables SDT (Service Description Table) et EIT (Event Information Table) également télédiffusées avec les flux de données, mais de manière asynchrone.

Dans le cas de télédiffusion à péage, des messages sécurisés de gestion, contrôle et de mise à jour (EMM), par exemple des clés de transmission servant à chiffrer les flux d'ECM sus-mentionnés, sont transmis dans les flux de données télédiffusés, en parallèle avec les programmes mais de manière asynchrone. Ces messages permettent notamment l'établissement de canaux de communication sécurisés individuellement avec chaque récepteur.

Par ailleurs, il est aussi possible de mettre à jour les logiciels applicatifs sur les unités de réception en transmettant avec les flux de données par télédiffusion les données de mise à jour nécessaires à ces dernières.

L'unité d'utilisateur STB dite également dispositif maître, reçoit le flux de données et gère les droits d'accès à ces données. Pour visualiser les données, une telle unité peut disposer de plusieurs moyens de communication tels qu'une sortie RGB ou Peritel. Dans ce cas, les signaux sont sous forme analogiques et protégés par des technologies différentes tels que Macrovision et CGMS-A (Copy Generation Management System - Analog). Ces technologies n'utilisent pas de mécanismes d'authentification et de vérification comme décrits.

Un autre moyen de communication est illustré sur la figure 1 qui représente un moyen sans-fil tel que Wifi. L'interface Wifi IN permet de transmettre les données à accès conditionnel vers un téléviseur DTV par exemple sous forme numérique. Cette forme numérique présente un grand attrait pour des personnes mal intentionnées et c'est pourquoi les données échangées dans les airs sont encryptées. D'autres formes de transmission câblées peuvent être utilisées tel que IEEE1394, Ethernet, USB, DVI et HDMI.

Selon la pratique, l'encryption des données repose sur une clé qui est dynamiquement générée et permet au téléviseur de décrypter ces données pour leur traitement. Si en lieu et place du téléviseur DTV c'est un ordinateur personnel qui dialogue avec le dispositif maître dans le but de stocker les données en clair, le fait d'encrypter les données pour leur transport n'apporte aucune protection.

C'est pourquoi une étape de vérification a été imposée, vérification basée sur la conformité du certificat mémorisé dans chaque dispositif cible. Une authentification mutuelle peut être effectuée sur la base de l'identifiant du certificat. Une clé est ensuite générée qui servira à l'encryption des données échangées.

Selon l'invention, dans le flux de données DT transmis du centre de gestion au dispositif maître sont placées des données composant le ou les tables de vérification L1, L2... Ln. Ces données peuvent être transmises de plusieurs manières de façon à réaliser le meilleur compromis entre bande passante et sécurisation de ces données, à savoir :
- messages EMM : ces messages sont des messages sécurisés de mise à jour de droits ou de clés et peuvent s'adresser à une unité, à un groupe d'unités ou à toutes les unités. Ils peuvent ainsi contenir des éléments de la liste de vérification, en particulier la liste positive. Cette liste peut être contenue dans un ou plusieurs messages EMM en fonction de sa taille.
- en association avec une mise à jour logicielle du récepteur par télédiffusion, bénéficiant ainsi des mécanismes de sécurisation du téléchargement associé bien connus, tels que authentification de la mise à jour et gestion du numéro de version par le récepteur.
- flux de données : contenu diffusé lors de mise en veille du service: on utilise les périodes creuses de diffusion, par exemple entre 4 et 6 h du matin pour remplacer le contenu audio/vidéo par les listes de vérification.
- table de signalisation. Ces tables font parties des données descriptives du contenu et peuvent contenir également les données de la grille de programmes. Ces tables peuvent contenir la ou les listes de vérification telles que décrites dans la présente invention, soit par exemple dans le cas de la norme DVB en association avec un contenu donné par insertion dans la table EIT contenant les programmes à 8 jours et transmise sur un canal dédié, disposant d'une large bande passante.

Dans les deux derniers cas, il est nécessaire de prévoir des mécanismes dédiés de sécurisation des listes de vérification, par exemple au moyen de clés dédiées connues des récepteurs.

Ces listes une fois reçues par le dispositif maître sont stockées soit dans une mémoire silicium (flash) ou sur disque dur. Elles peuvent être sécurisées localement par une clé propre à l'unité d'utilisateur ou la clé du certificat associé à cette unité.

Comme indiqué plus haut, ces tables peuvent définir soit les dispositifs habilités à traiter les données à accès conditionnels (liste positive) ou au contraire interdits d'un tel traitement (liste négative). Ces listes peuvent énumérer chaque identifiant concerné ou définir des plages d'identifiants. Ainsi si un appareil est piraté et son identifiant reproduit dans de nombreux clones, identifiés par la lutte anti-piratage, il faut l'exclure des dispositifs cibles autorisés.

Un point important de la présente invention est la flexibilité apportée par l'indication de vérification. Cette indication est directement associée au contenu et permet, avec un coût minime en terme de bande passante, de décider lors de la diffusion si une vérification doit être exécutée en référence à une ou plusieurs listes de vérification préalablement transmises, et de contrôler le numéro de version correspondant. Ces indications de vérification peuvent être transmises de plusieurs manières de façon à les rendre indissociables d'un contenu lors de sa télédiffusion, par exemple :
- dans un message de contrôle ECM, lorsque le contenu est encrypté (applications de télédiffusion à péage). Ces messages présentent l'avantage d'être sécurisés.
- directement dans les données de description du contenu, telles que la table d'allocation de programme PMT (Program Map Table) décrivant l'organisation des flux audio et vidéo associés au contenu.
- dans les tables de description du contenu régulièrement transmises avec ce dernier, telles que les tables ElTp/f comprenant les informations sur le contenu courant et le contenu suivant sur une chaîne de télédiffusion.

Dans les deux derniers cas, il est nécessaire de prévoir des mécanismes dédiés de sécurisation des listes de vérification, par exemple au moyen de clés dédiées connues des récepteurs.

Si plusieurs tables sont chargées dans le dispositif maître, l'indication de vérification va spécifier quelle table est à utiliser pour la vérification. Ainsi un contenu de faible valeur pourra spécifier une table de vérification différente qu'un contenu de haute valeur. Ceci s'appliquerait notamment dans le cas d'un récepteur mixte traitant des programmes gratuits ainsi que des programmes de télédiffusion à péage.

Par ailleurs, l'indication de vérification permet aussi d'identifier le numéro de version de la liste la plus récemment transmise, afin d'éviter l'éventuel filtrage par le récepteur des nouvelles listes de vérification plus restrictives.

Cette indication de vérification peut définir un niveau de sécurité. Dans une étape préalable, le dispositif maître reçoit une liste de sécurité avec pour chaque niveau, une définition de la ou des listes à utiliser. Par exemple un niveau de sécurité 3 signifie que pour le protocole HDCP, on spécifiera la liste HD_12, version 2.23 et pour le protocole DTCP, la liste DT_8, version 1,17. Par un seul niveau de sécurité, l'ensemble des protocoles ainsi que la version souhaitée est adressée. Cette liste intermédiaire est de préférence sécurisée.

Selon un mode de réalisation il est possible de transmettre une liste particulière pour un dispositif maître particulier. Ceci peut être réalisé en mode point à point ou en mode diffusion avec adressage du dispositif maître concerné. Cette liste va tenir compte de l'environnement matériel par exemple du type d'interface avec des dispositifs cibles. Il n'est pas utile de stocker les identifiants propres à un type d'interface (par exemple HDCP pour HDMI) alors que le seul interface prévu sur ce dispositif est de type USB.

Selon une variante de réalisation, la liste positive peut être limitée aux seuls dispositifs cibles préalablement enregistrés auprès du centre de gestion, correspondant aux dispositifs cibles effectivement connectés à un dispositif maître particulier.

Dans ce dernier cas, une procédure d'initialisation permet à l'utilisateur de communiquer l'ensemble des identifiants de ses dispositifs cibles. Cette procédure peut se faire d'une manière automatisée grâce à la voie de retour du dispositif maître et les identifiants, que ce soit les numéros de série ou l'identifiant du certificat, sont transmis au centre de gestion. Une description des capacités techniques des dispositifs cibles pourra compléter ces données (téléviseur, ordinateur, PVR avec ou sans graveur, etc.). La transmission de ces informations peut se faire également via le téléphone (serveur vocal) ou l'envoi d'un message court.

Cette procédure d'initialisation peut avantageusement utiliser un service Web (Internet) pour l'enregistrement des données d'un utilisateur.

Le centre de gestion disposant d'une liste noire (ou négative) va vérifier si les identifiants reçus par un utilisateur sont compris dans cette liste d'exclusion et exclure ces identifiants de la liste positive transmise au dispositif maître. Cette vérification peut se faire sur la base d'une liste positive listant tous les certificats valides.

Il se peut que le centre de gestion ne puisse pas utiliser une liste noire (ou négative) fiable, par exemple dans le cas d'un piratage massif de la norme HDCP. Dans ce cas, les identifiants reçus par un utilisateur doivent être contrôlés par un centre de contrôle externe disposant d'une liste d'identifiants valides. Ce centre de contrôle peut être propre à un fabricant, lorsque l'identifiant transmis par l'utilisateur identifie le fabriquant de l'équipement, ou directement correspondre à l'autorité de certification officielle telle que l'une des associations DTLA pour DTCP, SVPLA pour SVP, ou LLC pour HDCP, en charge avec la distribution des certificats valides à tous les fabricants implémentant la norme qu'elles contrôlent.

Il se peut par ailleurs que le centre de gestion ne connaisse pas les données précises, tels que le certificat, d'un dispositif cible d'un utilisateur. Sur la base de la transmission d'un identifiant matériel, qui pourrait être le numéro de série du dispositif ou toute autre indication permettant d'identifier ce dispositif, le centre de gestion va alors interroger un centre de contrôle pour obtenir les identifiants de certificats. Ce centre de contrôle peut être propre à un fabricant ou regrouper plusieurs fabricants, par exemple cela peut être l'autorité de certification officielle telle que l'une des associations DTLA pour DTCP, SVPLA pour SVP, ou LLC pour HDCP.

Le certificat d'un dispositif est généralement directement lié à la couche de communication. Ainsi si un dispositif contient plusieurs moyens de communication tels que USB et HDMI, il dispose généralement de plusieurs certificats correspondants à différentes normes telles que DTCP et HDCP. La vérification peut s'effectuer sur le moyen de communication actif pour la transmission des données du dispositif maître au dispositif cible ou sur tous les certificats.

Dans le cas d'un contenu qui serait stocké dans le dispositif maître avant son transfert vers le dispositif cible, les informations de vérification sont également stockées afin de pouvoir être exécutées lors de la transmission postérieure du contenu.

Selon un mode de réalisation de l'invention, la vérification dans les listes positives et/ou négatives se fait préalablement sur le dispositif maître. Il va lui-même vérifier la conformité du ou des certificats de ses moyens de communication. Il est possible de vérifier un numéro d'identification qui n'a aucun rapport avec les moyens de communication, par exemple son numéro de série.

Selon le mode d'opération choisi, dès lors que l'un des moyens de communication est révoqué, on considère que le dispositif maître est révoqué.

Dans le cas d'un réseau domestique, le dispositif maître peut être connecté à un premier dispositif cible tel qu'une unité de stockage. La vérification est effectuée par le dispositif maître afin d'autoriser le dispositif cible au transfert des données. Parallèlement au transfert des données, les listes de vérification sont également transmises. L'indication de vérification qui est associée au contenu pourra ainsi être exécutée par ce dispositif qui devient alors dispositif maître. Le procédé de l'invention est donc reporté sur tous les éléments d'un réseau domestique.

La présente invention couvre également un dispositif maître disposant de moyens de réception pour un ou des contenus et des moyens de réception d'une ou des listes de vérification telles que décrites ci-dessus. Ce dispositif comprend des moyens de vérification de conformité d'un dispositif cible et des moyens de stockage desdites listes. Ce dispositif comprend des moyens pour extraite un indication de vérification associée au contenu et pour exécuter un cycle de vérification du dispositif cible sur la base de l'indication de vérification et du ou des listes de vérification préalablement stockées.

## Revendications

1. Méthode de vérification d'un dispositif cible relié à un dispositif maître, celui-ci disposant de moyens pour recevoir un contenu transmis par un centre de diffusion via un flux de données, le dispositif maître et le dispositif cible s'authentifiant par l'échange d'un certificat comprenant au moins un identifiant de certificat, cette méthode comprenant les étapes suivantes :
a. transmission par télédiffusion d'au moins une table de vérification de dispositifs cible contenant une liste d'identifiant de certificat,
b. stockage de cette liste dans le dispositif maître,
c. extraction d'une indication de vérification associée au contenu, cette indication comprenant l'activation ou la désactivation de la vérification du dispositif cible,
d. si l'indication de vérification comprend l'activation de la vérification, vérification du certificat du dispositif cible par le dispositif maître, utilisation d'au moins une liste stockée pour autoriser ou interdire l'échange de donnée avec ledit dispositif cible.

2. Méthode de vérification selon la revendication 1, **caractérisée en ce que** la liste est dite positive et comprend les identifiants de certificats autorisés à un échange de données entre le dispositif maître et le dispositif cible.

3. Méthode de vérification selon la revendication 1, **caractérisée en ce que** la liste est dite négative et comprend les identifiants de certificats interdits à un échange de données entre le dispositif maître et le dispositif cible.

4. Méthode de vérification selon l'une des revendications 1 à 3, **caractérisée en ce que** l'indication de vérification est contenue dans les données de description du contenu.

5. Méthode de vérification selon la revendication 4, **caractérisée en ce que** ces données de description du contenu sont transmises dans la table allocation de programme (PMT).

6. Méthode de vérification selon la revendication 4, **caractérisée en ce que** ces données de description du contenu sont transmises dans les informations (ElTp/f) sur le contenu courant et suivant sur un canal.

7. Méthode de vérification selon l'une des revendications 1 à 3, **caractérisée** l'indication de vérification est contenue dans un message de contrôle (ECM) contenant une clé de déchiffrement dudit contenu.

8. Méthode de vérification selon l'une des revendications 1 à 7, **caractérisée en ce que** le flux de données comprend une pluralité de listes de vérification et **en ce que** l' indication de vérification associée audit contenu indique la liste de vérification à utiliser.

9. Méthode de vérification selon la revendication 2, **caractérisée en ce que** la liste dite positive est unique au dispositif maître.

10. Méthode de vérification selon la revendication 9, **caractérisée en ce que** la liste dite positive est unique au dispositif maître et comprend l'ensemble des dispositifs cibles identifiés par le centre de diffusion comme faisant partie d'un réseau domestique connecté audit dispositif maître.

11. Méthode de vérification selon la revendication 10, **caractérisée en ce que** les identifiants dans la liste dite positive unique au dispositif maître est vérifiée par le centre de diffusion préalablement à sa diffusion pour en exclure les identifiants signalés par une liste négative globale connue de ce dernier.

12. Méthode de vérification selon la revendication 10, **caractérisée en ce que** l'identifiant du certificat du dispositif cible est effectué selon les étapes suivantes :
- transmission au centre de gestion d'un identifiant matériel du dispositif cible, cet identifiant matériel étant propre au fabricant dudit dispositif cible,
- transmission par le centre de gestion dudit identifiant matériel à un centre de contrôle dudit dispositif cible,
- en retour, le centre de contrôle transmet l'identifiant de certificat au centre de gestion associé audit identifiant matériel,
- formation de la liste positive incluant ledit identifiant de certificat par le centre de gestion et transmission de ladite liste au dispositif maître.

13. Méthode de vérification selon la revendication 12, **caractérisée en ce que** l'identifiant matériel est transmis au centre de diffusion par le détenteur du dispositif maître au moyen de la voie de retour de ce dernier.

14. Méthode de vérification selon la revendication 12, **caractérisée en ce que** l'identifiant de certificat est transmis au centre de diffusion par le détenteur du dispositif maître par téléphone ou message court (SMS)

15. Méthode de vérification selon les revendications 9 à 11, **caractérisée en ce que** la liste dite positive unique au dispositif maître est transmise à ce dernier au moyen d'un ou plusieurs messages personnels (EMM) dans le flux de données.

16. Méthode de vérification selon les revendications 9 à 11, **caractérisée en ce que** la liste dite positive unique au dispositif maître est transmise à ce dernier par un moyen de communication unidirectionnel.

17. Méthode de vérification selon l'un des revendications précédentes, **caractérisée en ce que** le dispositif cible est un dispositif de visualisation, un ordinateur, une unité de stockage ou serveur de réseau.
